# EUROPÄISCHE PATENTANMELDUNG

(11) **EP 0 829 653 A2**
(43) Veröffentlichungstag der Anmeldung: **18.03.1998**
(21) Anmeldenummer: 97112415.1
(22) Anmeldetag: 19.07.1997
(51) Int. Cl.: F16C 1/10, F16C 1/00

(54) **Reibungsarmer Bowdenzug**

(30) Priorität: 17.09.1996 DE 19637820
(71) Anmelder: Bayerische Motoren Werke Aktiengesellschaft, 80788 München (DE)
(72) Erfinder: Geib, Willi, 85716 Unterschleissheim (DE)

(57) **Zusammenfassung**

Es wird eine Vorrichtung zum Übertragen einer Längsbewegung eines biegsamen Elementes (Seele) in einer biegsamen Führungshülle, insbesondere ein Bowdenzug, vorgeschlagen, bei der eine Einrichtung zum Erzeugen einer Relativverdrehung zwischen Führungshülle und der Seele vorgesehen ist.

Durch die Relativverdrehung der beiden Teile vor Beginn und während der Längsbewegung wird sowohl die Anfangsreibung, als auch die Reibung während der Längsbewegung deutlich vermindert.

## Beschreibung

Bei derartigen Vorrichtungen, die in der Regel als Bowdenzug bezeichnet werden, besteht das Problem, daß sie nur nach Überwindung einer gewissen Reibung befriedigend arbeiten.

Zur Lösung dieses Problems sind schon sehr aufwendige Fernbetätigungen bekannt, bei denen in einer Führungshülle, durch geeignete Schienen abgestützt, beiderseits einer mittleren Zentrallamelle Längs-Kugelführungen angeordnet sind. Diese Bauart ermöglicht einen guten Wirkungsgrad beim Verschieben des inneren Elementes. Sie ist jedoch sehr bauaufwendig und damit teuer.

Der Erfindung liegt die Aufgabe zugrunde, eine andere Lösung zur Überwindung der Anfangsreibung, sowie auch der Reibung während der Längsbetätigung, zu schaffen. Darüber hinaus werden stick-slip-Effekte vermieden.

Diese Aufgabe wird bei einer Vorrichtung der vorausgesetzten Bauart dadurch gelöst, daß eine Einrichtung zum Erzeugen einer Relativverdrehung zwischen Führungshülle und der Seele vorgesehen ist.

Zweckmäßig ist dabei die Seele um ihre Längsachse verdrehbar. Hierzu kann die Seele an einem ihrer Enden mit einer Drehantriebseinrichtung versehen sein.

Diese Drehantriebseinrichtung kann gegebenenfalls ein Elektromotor sein. Da nur eine sehr niedrige Drehzahl erforderlich ist, ist auch der Energieaufwand minimal. Weiterhin hält sich der mechanische Verschleiß in Grenzen. Es genügt beispielsweise, wenn die Drehantriebseinrichtung kurz vor Beginn und während einer Längsbewegung der Seele wirksam ist. Dabei kann die Drehantriebseinrichtung sensorgesteuert eingeschaltet werden.

Zum Reduzieren der Antriebsleistung, aber auch des Verschleißes, kann weiterhin die Seele eine Gleit-Ummantelung aufweisen.

Es ist auch denkbar, zwischen der Führungshülle und der Seele eine verdrehbare Zwischenhülle vorzusehen. In manchen Fällen kann es sich weiterhin auch als zweckmäßig erweisen, die Seele und die Zwischenhülle gegenläufig zueinander zu verdrehen.

Mit der Erfindung werden für Bowdenzüge weitere Einsatzmöglichkeiten und neue konstruktive Lösungen eröffnet, wobei Funktion und Komfort sichergestellt werden können. Auch die genaue Einstellung des Bowdenzugs ist erleichtert, wenn während der Justierung die Relativverdrehung zwischen Führungshülle und Seele eingeschaltet wird.

## Patentansprüche

1. Vorrichtung zum Übertragen einer Längsbewegung eines biegsamen Elementes (Seele) in einer biegsamen Führungshülle, insbesondere Bowdenzug,
dadurch gekennzeichnet, daß eine Einrichtung zum Erzeugen einer Relativverdrehung zwischen Führungshülle und der Seele vorgesehen ist.

2. Vorrichtung nach Anspruch 1, dadurch gekennzeichnet, daß die Seele um ihre Längsachse verdrehbar ist.

3. Vorrichtung nach Anspruch 2, dadurch gekennzeichnet, daß die Seele an einem Ende mit einer Drehantriebseinrichtung versehen ist.

4. Vorrichtung nach Anspruch 2 oder 3, dadurch gekennzeichnet, daß als Drehantriebseinrichtung ein Elektromotor vorgesehen ist.

5. Vorrichtung nach Anspruch 3 oder 4, dadurch gekennzeichnet, daß die Drehantriebseinrichtung kurz vor Beginn und während einer Längsbewegung der Seele wirksam ist.

6. Vorrichtung nach Anspruch 5, dadurch gekennzeichnet, daß die Drehantriebseinrichtung sensorgesteuert ist.

7. Vorrichtung nach Anspruch 1, dadurch gekennzeichnet, daß die Seele eine Gleit-Ummantelung aufweist.

8. Vorrichtung nach Anspruch 1, dadurch gekennzeichnet, daß zwischen Führungshülle und Seele eine verdrehbare Zwischenhülle vorgesehen ist.

9. Vorrichtung nach Anspruch 8, dadurch gekennzeichnet, daß die Seele und die Zwischenhülle gegenläufig zueinander verdrehbar sind.
